# EUROPÄISCHE PATENTSCHRIFT

(11) **EP 1 735 253 B1**
(45) Veröffentlichungstag und Bekanntmachung des Hinweises auf die Patenterteilung: **05.12.2007**
(21) Anmeldenummer: 05718354.3
(22) Anmeldetag: 05.04.2005
(51) Int. Cl.: C04B 28/08, C04B 7/21

(54) **VERFAHREN ZUR HERSTELLUNG VON HOCHFESTEM, SÄUREBESTÄNDIGEM BETON**
METHOD FOR THE PRODUCTION OF HIGHLY RESISTANT ACID-RESISTANT CONCRETE
PROCEDE DE PRODUCTION DE BETON A HAUTE RESISTANCE ET RESISTANT AUX ACIDES

(30) Priorität: 05.04.2004 AT 5992004
(43) Veröffentlichungstag der Anmeldung: 27.12.2006
(73) Patentinhaber: Holcim Ltd., 8050 Zürich (CH)
(72) Erfinder: KO, Suz-Chung, CH-5600 Lenzburg (CH); BAALBAKI, Moussa, CH-5103 Möriken (CH); GEBAUER, Juraj, CH-5106 Veltheim (CH)
(74) Vertreter: Haffner, Thomas M.
(86) Internationale Anmeldenummer: PCT/IB2005/000882
(87) Internationale Veröffentlichungsnummer: WO 2005/097702

(56) Entgegenhaltungen:
- WO-A-00/00447
- US-A1- 2003 167 972

## Beschreibung

Die Erfindung bezieht sich auf ein Verfahren zur Herstellung von hochfestem, säurebeständigem Beton unter Verwendung von Wasser, hydraulischem Bindemittel und Zuschlagstoffen.

Für die Herstellung von Beton sind unterschiedliche hydraulische Bindemittel bekannt, deren Zusammensetzung jeweils die bestmögliche Kombination der gewünschten Produktqualitäten gewährleisten soll. Insbesondere sind Zemente bekannt, z.B aus der WO 00/00447, welche sich durch hohe Frühfestigkeit bei gleichzeitig guten Endfestigkeiten auszeichnen. Eine weitere wesentliche Eigenschaft von Beton ist aber auch die Rissfreiheit und damit ein möglichst geringes Schwinden beim Erhärten sowie die Chemikalienbeständigkeit. Insgesamt sind die jeweiligen hydraulischen Bindemittel zumeist für eine der gewünschten Eigenschaften optimiert. Supersulfatierte Hüttenzemente basierend auf der Zugabe von Kalziumsulfat zum Zement sind weitestgehend genormt und enthalten wenigstens 75 Gew.% zerkleinerter, granulierter Hochofenschlacke und über 5 Gew.% SO₃ in Form von Kalziumsulfatzusätzen, wobei gleichzeitig maximal 5 Gew.% gelöschter Kalk, Portlandzementklinker oder Portlandzement enthalten sind. Wenn höhere Anteile an natürlichen Aluminiumsilikaten eingesetzt werden sollen und der entsprechende Anteil an Hochofenschlacke reduziert werden soll, hat dies zumeist zur Folge, dass die gewünschten Festigkeitswerte nicht mehr ohne weiteres erreicht werden und insbesondere auch das Schwindungsverhalten ungünstiger wird, wodurch die Rissbildungsgefahr zunehmen kann. Für eine gute Chemikalienbeständigkeit ist es nun wiederum erforderlich einen besonders dichten Beton zu schaffen, welcher frei von Rissen bleibt und sich durch eine geringe Gasdurchlässigkeit auszeichnet. Wenn wiederum ein entsprechend dichter Beton geschaffen werden soll, müssen in aller Regel Kompromisse im Bezug auf die Frühfestigkeit und die Endfestigkeit gemacht werden, wenn entsprechend natürliche Aluminiumsilikate oder beispielsweise Flugasche eingesetzt werden soll.

Zur Verbesserung der Frühfestigkeit bei einem derartigen supersulfatiertem Bindemittel mit entsprechend geringerem Anteil an Hochofenschlacke sind somit Modifikationen im Bezug auf die eingesetzten Aktivatoren ebenso erforderlich, wie wietere begleitende Maßnahmen zu setzen, um die gewünschte Chemikalienbeständigkeit und die gewünschte Festigkeit, und insbesondere eine hohe Frühfestigkeit und eine hohe Endfestigkeit, bei möglichst geringer Gasdurchlässigkeit zu gewährleisten.

Die Erfindung zielt somit darauf ab, ein Verfahren zur Herstellung von hochfestem, säurebeständigem Beton zu schaffen, mit welchem möglichst viele der eingangs erwähnten Randbedingungen auch bei verringertem Einsatz von Hochofenschlacke sicher erreicht werden können.

Zur Lösung dieser Aufgabe besteht das erfindungsgemäße Verfahren im Wesentlichen darin, dass ein hydraulisches Bindemittel enthaltend Aluminosilikate, Kalziumsulfat und einen Alkalimetallsalze enthaltenden Aktivator eingesetzt wird, wobei die Aluminosilikate ausgewählt sind aus der Gruppe bestehend aus Hochofenschlacke, Ton, Mergel und Industrie-Nebenprodukten wie Flugasche, mit der Maßgabe, dass der Al₂O₃-Gehalt des Bindemittels über 5 Gew.% beträgt und Hochofenschlacke in einer Menge von weniger als 35 Gew.% des Bindemittels vorhanden ist und Zementofenstaub in einer Menge von 1 bis 20 Gew.% des Bindemittels als Aktivator eingesetzt wird, wobei das hydraulische Bindemittel in einer Menge von > 400kg pro m³ Beton unter Einhaltung eines Wasser/Bindemittel Verhältnisses von 0,25 bis 0,40 eingesetzt wird. Erfindungsgemäß wird somit eine Mindestmenge eines speziellen hydraulischen Bindemittels vorgeschlagen, welches neben Kalziumsulfat zusätzlich Alkaliaktivatoren in den angegebenen Mengen enthält, bei welchem der Anteil an Hochofenschlacke auf zwischen 20 und 35 Gew.% beschränkt werden kann und womit insgesamt ein besonders gutes Schwindungsverhalten gewährleistet werden kann. Dadurch, dass ein derartiges hydraulisches Bindemittel in Mengen von über 400kg/m³ eingesetzt wird und gleichzeitig das Wasser/Zement (W/C) Verhältnis auf relativ niedrige Werte zwischen 0,25 bis 0,40 gehalten wird, kann sichergestellt werden, dass Rissbildungen hintangehalten werden und gleichzeitig ein säurebeständiger, hochfester, dichter Beton erzielt wird. Vor allem die Verwendung von Zementofenstaub als Aktivator erlaubt es auf OH-Ionen zu verzichten, wobei der Zementofenstaub auch SO₃ in einer für die Festigkeit günstigen Weise bereitstellt.

Mit Vorteil wird das Verfahren so durchgeführt, dass das wasser/Bindemittel Verhältnis zwischen 0,30 und 0,35 eingestellt wird, wobei Plastifizierungsmittel in Mengen von 0,01 bis 1 Gew.% zugesetzt werden können.

Die Erfindung wird nachfolgend anhand von Ausführungsbeispielen näher erläutert. Als hydraulisches Bindemittel wurde hiebei ein Bindemittel entsprechend der nachfolgenden Zusammensetzung eingesetzt.

| | |
|---|---|
| Zementofenstaub | 10 Gew.% |
| Hochofenschlacke | 20 Gew.% |
| CaSO4 (Anhydrit) | 15 Gew.% |
| Mergel | 37 Gew.% |
| Basalt | 17 Gew.% |

Bei Einsatz von 425kg/m³ des obigen Zements unter Einhaltung eines W/C Faktors von 0,35 wurden nachfolgende Festigkeiten

| | | |
|---|---|---|
| CS (MPa) | 1 Tag | 14,1 |
| | 7 Tage | 31,3 |
| | 28 Tage | 40,5 |
| | 90 Tage | 48,6 |

bei einer O₂ Permeabilität (*E-16m²) von 0,1572 gemessen.

Unter Einhaltung eines W/C Faktors von 0,30 und Einsatz von 450kg/m³ des obigen Zements wurden bei Zusatz von 0,7 Gew.% Naphtalinsulfonat Festigkeiten

| | | |
|---|---|---|
| CS (MPa) | 1 Tag | 18,4 |
| | 7 Tage | 37,3 |
| | 28 Tage | 44,5 |
| | 90 Tage | 52 |

bei einer O₂ Permeabilität (*E-16m2) von 0,118 erzielt. Der Beton zeichnete sich durch verbesserte Chemikalienbeständigkeit und Rissfreiheit aus.

## Patentansprüche

1. Verfahren zur Herstellung von hochfestem, säure-beständigem Beton unter Verwendung von Wasser, hydraulischem Bindemittel und Zuschlagstoffen, **dadurch gekennzeichnet, dass** ein hydraulisches Bindemittel enthaltend Aluminosilikate, Kalziumsulfat und einen Alkalimetallsalze enthaltenden Aktivator eingesetzt wird, wobei die Aluminosilikate ausgewählt sind aus der Gruppe bestehend aus Hochofenschlacke, Ton, Mergel und Industrie-Nebenprodukten wie Flugasche, mit der Maßgabe, dass der Al₂O₃-Gehalt des Bindemittels über 5 Gew.% beträgt und Hochofenschlacke in einer Menge von weniger als 35 Gew.% des Bindemittels vorhanden ist, und Zementofenstaub in einer Menge von 1 bis 20 Gew.% des Bindemittels als Aktivator eingesetzt wird, wobei das hydraulische Bindemittel in einer Menge von > 400kg pro m³ Beton unter Einhaltung eines Wasser/Bindemittel Verhältnisses von 0,25 bis 0,40 eingesetzt wird.

2. Verfahren nach Anspruch 1, **dadurch gekennzeichnet, dass** das Wasser/Bindemittel Verhältnis zwischen 0,30 und 0,35 eingestellt wird.

3. Verfahren nach Anspruch 1 oder 2, **dadurch gekennzeichnet, dass** Plastifizierungsmittel in Mengen von 0,01 bis 1 Gew.% zugesetzt werden.

## Claims

1. A method for producing high-strength, acid-resistant concrete using water, hydraulic binder and aggregates, **characterized in that** a hydraulic binder comprising aluminosilicates, calcium sulphate and an activator containing alkali metal salts is used, wherein the aluminosilicates are selected from the group consisting of blast furnace slag, clay, marl and industrial by-products such as fly ash, with the proviso that the Al₂O₃-content of the binder exceeds 5% by weight and blast furnace slag is present in an amount of less than 35% by weight of the binder, and cement kiln dust is used as an activator in an amount of from 1 to 20% by weight of the binder, wherein the hydraulic binder is used in an amount of >400 kg per m³ concrete while observing a water/binder ratio of from 0.25 to 0.40.

2. A method according to claim 1, **characterized in that** water/binder ratio is adjusted to between 0.30 and 0.35.

3. A method according to claim 1 or 2, **characterized in that** plasticizers are added in amounts of from 0.01 to 1% by weight.

## Revendications

1. Procédé de préparation de béton à résistance élevée, résistant aux acides, en utilisant de l'eau, un liant hydraulique et des agrégats, **caractérisé en ce qu'**un liant hydraulique contenant des aminosilicates, du sulfate de calcium et un activateur contenant des sels de métal alcalin est utilisé, les aminosilicates étant sélectionnés parmi le groupe constitué du laitier de haut fourneau, de l'argile, de la marne et de sous-produits industriels comme des cendres volantes, sous réserve que la teneur en Al₂O₃ du liant soit supérieure à 5 % en poids, que le laitier de haut fourneau soit présent en une quantité inférieure à 35 % en poids du liant, et de la poussière de four à ciment est utilisée en tant qu'activateur en une quantité de 1 à 20 % en poids du liant, le liant hydraulique étant utilisé en une quantité > 400 kg par m³ de béton en observant un rapport eau/liant de 0,25 à 0,40.

2. Procédé selon la revendication 1, **caractérisé en ce que** le rapport eau/liant est ajusté entre 0,30 et 0,35.

3. Procédé selon la revendication 1 ou 2, **caractérisé en ce que** l'agent de plastification est ajouté en des quantités de 0,01 à 1 % en poids.
